# EUROPEAN PATENT APPLICATION

(11) **EP 4 529 014 A1**
(43) Date of publication of application: **26.03.2025**
(21) Application number: 23870873.9
(22) Date of filing: 26.09.2023
(51) Int. Cl.: H02M 7/04

(54) **SWITCH POWER SOURCE CIRCUIT, POWER ADAPTER, AND CHARGING SYSTEM**

(30) Priority: 30.09.2022 CN 202211214958
(71) Applicant: Huawei Technologies Co., Ltd., Shenzhen, Guangdong 518129 (CN)
(72) Inventor: LIU, Wei, Shenzhen, Guangdong 518129 (CN); HOU, Qinghui, Shenzhen, Guangdong 518129 (CN)
(74) Representative: MERH-IP Matias Erny Reichl Hoffmann Patentanwälte PartG mbB
(86) International application number: PCT/CN2023/121788
(87) International publication number: WO 2024/067646

(57) **Abstract**

A switch mode power supply circuit, a power adapter, and a charging system are provided, and relate to the field of electronic technologies, to reduce a power loss. The switch mode power supply circuit includes a control chip, a power supply circuit, a power supply control circuit, and an optical coupling circuit. The optical coupling circuit is configured to output a feedback voltage to the power supply control circuit. The power supply control circuit is configured to control, based on the feedback voltage, a voltage output by the power supply circuit to a power supply pin of the control chip.

## Description

This application claims priority to Chinese Patent Application No. 202211214958.1, filed with the China National Intellectual Property Administration on September 30, 2022 and entitled "SWITCH MODE POWER SUPPLY CIRCUIT, POWER ADAPTER, AND CHARGING SYSTEM", which is incorporated herein by reference in its entirety.

### TECHNICAL FIELD

Embodiments of this application relate to the field of electronic technologies, and in particular, to a switch mode power supply circuit, a power adapter, and a charging system.

### BACKGROUND

A switch mode power supply circuit is widely used in power adapters (or chargers) of electronic devices such as a mobile phone, a watch, and a tablet computer. Switch mode power supply circuits below 400 W account for about 70% to 80% of the market, and flyback switch mode power supply circuits account for a majority of the market because of a simple circuit structure and low costs. Almost all common consumer power supply products, such as a mobile phone charger and a laptop charger, use the flyback switch mode power supply circuit.

In a typical application scenario of a user, usually, after a mobile phone or a laptop is fully charged, a power adapter is still placed on a power strip most of the time. In this case, the power adapter is in a no-load state or a light-load operating state, and still consumes energy. In the context of increasingly global energy shortage and energy conservation and emission reduction in green economy, energy conservation, emission reduction, and using green energy have become a trend in the power supply field. Stricter regulations have been issued on no-load power consumption of power adapters of mobile phones and laptops. For example, the second phase energy efficiency standard of the European Union's COC5 (certificate of conformance) imposes a power consumption requirement of 75 mW. Some vendors have stricter requirements on standby power consumption, and only power adapters with standby power consumption less than 30 mW can meet the requirements. Therefore, it is important to reduce light-load and no-load power consumption of power adapters.

### SUMMARY

Embodiments of this application provide a switch mode power supply circuit, a power adapter, and a charging system, to reduce power consumption.

According to a first aspect, a switch mode power supply circuit is provided. The switch mode power supply circuit includes a control chip, a power supply circuit, a power supply control circuit, and an optical coupling circuit. The power supply circuit is connected to a power supply pin of the control chip. A transmit end of the optical coupling circuit is connected to a voltage output end of the switch mode power supply circuit, and a receive end of the optical coupling circuit is connected to the power supply circuit via the power supply control circuit. Functionally, the optical coupling circuit is configured to output a feedback voltage to the power supply control circuit, and the power supply control circuit is configured to control, based on the feedback voltage, a voltage output by the power supply circuit to the power supply pin. In this way, the power supply control circuit controls, based on the feedback voltage VFB, the voltage output by the power supply circuit to the power supply pin of the control chip. In other words, a status of a power Pout may be reflected, and different voltages are output to the power supply pin VCC of the control chip. For example, when load of the entire system is in a light-load state or a no-load state, Pout is low. In this case, the feedback voltage VFB is low, and the power supply control circuit may control, based on the feedback voltage, the power supply circuit to decrease the voltage output to the power supply pin VCC. When the load of the entire system is in a heavy-load state, Pout is high. In this case, the feedback voltage VFB is high, and the power supply control circuit may control, based on the feedback voltage, the power supply circuit to increase the voltage output to the power supply pin VCC. In this way, in different load states, the power supply control circuit may control, based on the feedback voltage, the power supply circuit to provide different voltages for the control chip. This can reduce power consumption of a power adapter as much as possible in the light-load state or the no-load state.

In a possible implementation, the power supply control circuit is specifically configured to: when determining that the feedback voltage is less than a first threshold, output a first control signal to the power supply circuit; and the power supply circuit is configured to output a first voltage to the power supply pin based on the first control signal. The power supply control circuit is specifically configured to: when determining that the feedback voltage is greater than or equal to the first threshold, output a second control signal to the power supply circuit; and the power supply circuit is configured to output a second voltage to the power supply pin based on the second control signal. The second voltage is greater than the first voltage. In this example, a first threshold used for comparison is set, so that the power supply circuit may compare the feedback voltage with the first threshold. When the feedback voltage is less than the first threshold, it indicates that the load of the entire system is in the light-load state or the no-load state, and Pout is low. In this case, the power supply control circuit may control, based on the feedback voltage, the power supply circuit to decrease, to the lower first voltage, the voltage output to the power supply pin VCC. When the feedback voltage is greater than or equal to the first threshold, it indicates that the load of the entire system is in the heavy-load state, and Pout is high. In this case, the power supply control circuit may control, based on the feedback voltage, the power supply circuit to increase, to the higher second voltage, the voltage output to the power supply pin VCC.

In a possible implementation, generally, in a stable load state, the feedback voltage VFB output by the optical coupling circuit fluctuates to some extent due to fluctuation of a system voltage. To avoid such fluctuation, when the feedback voltage VFB is just near the first threshold VFB 1, the power supply control circuit frequently configures an output voltage of the power supply circuit to be switched between the first voltage V1 and the second voltage V2. The power supply control circuit is specifically configured to: when determining that the feedback voltage is less than or equal to a second threshold, output a first control signal to the power supply circuit; and the power supply circuit is configured to output a first voltage to the power supply pin based on the first control signal. The power supply control circuit is specifically configured to: when determining that the feedback voltage is greater than or equal to a first threshold, output a second control signal to the power supply circuit; and the power supply circuit is configured to output a second voltage to the power supply pin based on the second control signal. The second threshold is less than the first threshold, and the second voltage is greater than the first voltage. In this way, a difference between the first threshold VFB 1 and the second threshold VFB2 is within a proper range, to ensure that the power supply control circuit does not frequently configure the output voltage of the power supply circuit to be switched between the first voltage V1 and the second voltage V2.

In a possible implementation, in this embodiment of this application, the first threshold VFB1 and the second threshold VFB2 may further constitute a switching hysteresis voltage interval. In the switching hysteresis voltage interval, the power supply control circuit is specifically configured to: when determining that the feedback voltage is between the first threshold and the second threshold, output a third control signal to the power supply circuit; and the power supply circuit is configured to maintain, based on the third control signal, a third voltage currently output to the power supply pin. The third voltage is the first voltage or the second voltage. For example, when the power supply control circuit determines that the feedback voltage is between the first threshold and the second threshold, the power supply circuit is controlled, based on the third control signal, to keep outputting the first voltage to the power supply pin if the currently output third voltage is the first voltage, and keep outputting the second voltage to the power supply pin if the currently output third voltage is the second voltage. In this way, it is ensured that the power supply control circuit does not frequently configure the output voltage of the power supply circuit to be switched between the first voltage V1 and the second voltage V2, and it is also ensured that the control chip is not powered off.

In a possible implementation, a difference between the first threshold and the second threshold is within [100 mV, 200 mV]. The difference is properly set, to ensure that the power supply control circuit does not frequently configure the output voltage of the power supply circuit to be switched between the first voltage V1 and the second voltage V2.

In a possible implementation, the power supply circuit includes a boost boost circuit, a buck buck/boost boost circuit, and a switched capacitor SC circuit.

In a possible implementation, the control chip includes the power supply circuit and the power supply control circuit. The control chip includes a feedback pin connected to the power supply control circuit, and the receive end of the optical coupling circuit is connected to the feedback pin. In this way, the power supply circuit and the power supply control circuit are integrated into the control chip, so that component integration can be improved, to reduce space occupied by the circuit in the power adapter. This facilitates device miniaturization.

In a possible implementation, based on a power supply requirement of the control chip, the first voltage is within [4.5 V, 12 V], and the second voltage is within [6.5 V, 15 V].

In a possible implementation, the first voltage is 8 V, and the second voltage is 10 V; or the first voltage is 12 V, and the second voltage is 14 V.

According to a second aspect, a control chip is provided, and is used in a switch mode power supply circuit. The switch mode power supply circuit includes a control chip and an optical coupling circuit. The control chip includes a power supply circuit and a power supply control circuit. The power supply circuit is connected to a power supply pin of the control chip. A transmit end of the optical coupling circuit is connected to a voltage output end of the switch mode power supply circuit, and a receive end of the optical coupling circuit is connected to the power supply circuit via the power supply control circuit. The control chip includes a feedback pin connected to the power supply control circuit, and the feedback pin is configured to connect to the receive end of the optical coupling circuit. The power supply control circuit is configured to control, based on a feedback voltage output by the optical coupling circuit, a voltage output by the power supply circuit to the power supply pin.

In a possible implementation, the power supply control circuit is specifically configured to: when determining that the feedback voltage is less than a first threshold, output a first control signal to the power supply circuit; and the power supply circuit is configured to output a first voltage to the power supply pin based on the first control signal. The power supply control circuit is specifically configured to: when determining that the feedback voltage is greater than or equal to the first threshold, output a second control signal to the power supply circuit; and the power supply circuit is configured to output a second voltage to the power supply pin based on the second control signal. The second voltage is greater than the first voltage.

In a possible implementation, the power supply control circuit is specifically configured to: when determining that the feedback voltage is less than or equal to a second threshold, output a first control signal to the power supply circuit; and the power supply circuit is configured to output a first voltage to the power supply pin based on the first control signal. The power supply control circuit is specifically configured to: when determining that the feedback voltage is greater than or equal to a first threshold, output a second control signal to the power supply circuit; and the power supply circuit is configured to output a second voltage to the power supply pin based on the second control signal. The second threshold is less than the first threshold, and the second voltage is greater than the first voltage.

In a possible implementation, the power supply control circuit is specifically configured to: when determining that the feedback voltage is between the first threshold and the second threshold, output a third control signal to the power supply circuit; and the power supply circuit is configured to maintain, based on the third control signal, a third voltage currently output to the power supply pin. The third voltage is the first voltage or the second voltage.

In a possible implementation, a difference between the first threshold and the second threshold is within [100 mV, 200 mV].

In a possible implementation, the power supply circuit includes a boost circuit, a buck/boost circuit, and an SC circuit.

In a possible implementation, the first voltage is within [4.5 V, 12 V], and the second voltage is within [6.5 V, 15 V].

In a possible implementation, the first voltage is 8 V, and the second voltage is 10 V; or the first voltage is 12 V, and the second voltage is 14 V.

According to a third aspect, a power supply control method is provided, and is applied to power supply control for a control chip of a switch mode power supply circuit. The method includes the following steps: outputting a feedback voltage via a receive end of an optical coupling circuit, where a transmit end of the optical coupling circuit is connected to a voltage output end of the switch mode power supply circuit; and controlling, based on the feedback voltage, a voltage output to a power supply pin of the control chip.

In a possible implementation, the controlling, based on the feedback voltage, a voltage output to a power supply pin of the control chip of the switch mode power supply circuit includes: when it is determined that the feedback voltage is less than a first threshold, outputting a first control signal; and outputting a first voltage to the power supply pin of the control chip of the switch mode power supply circuit based on the first control signal; or when it is determined that the feedback voltage is greater than or equal to the first threshold, outputting a second control signal; and outputting a second voltage to the power supply pin of the control chip of the switch mode power supply circuit based on the second control signal. The second voltage is greater than the first voltage.

In a possible implementation, the controlling, based on the feedback voltage, a voltage output to a power supply pin of the control chip of the switch mode power supply circuit includes: when it is determined that the feedback voltage is less than or equal to a second threshold, outputting a first control signal; and outputting a first voltage to the power supply pin of the control chip of the switch mode power supply circuit based on the first control signal; or when it is determined that the feedback voltage is greater than or equal to a first threshold, outputting a second control signal; and outputting a second voltage to the power supply pin of the control chip of the switch mode power supply circuit based on the second control signal. The second threshold is less than the first threshold, and the second voltage is greater than the first voltage.

In a possible implementation, the controlling, based on the feedback voltage, a voltage output to a power supply pin of the control chip of the switch mode power supply circuit further includes: when it is determined that the feedback voltage is between the first threshold and the second threshold, outputting a third control signal; and maintaining, based on the third control signal, a third voltage currently output to the power supply pin of the control chip of the switch mode power supply circuit. The third voltage is the first voltage or the second voltage.

In a possible implementation, a difference between the first threshold and the second threshold is within [100 mV, 200 mV].

According to a fourth aspect, a power adapter is provided, including a housing and the switch mode power supply circuit provided in the first aspect and the possible implementations of the first aspect or the control chip provided in the second aspect and the possible implementations of the second aspect that is mounted in the housing.

According to a fifth aspect, a charging system is provided, including a power adapter and an electronic device. The power adapter is connected to the electronic device, and the power adapter includes the power adapter according to the fourth aspect.

For technical problems resolved and technical effects achieved in the second aspect to the fifth aspect and the possible implementations of the second aspect to the fifth aspect, refer to the related descriptions in the first aspect and the possible implementations of the first aspect. Details are not described herein again.

### BRIEF DESCRIPTION OF DRAWINGS

FIG. 1 is a diagram of a structure of a charging system according to an embodiment of this application;
FIG. 2 is a diagram of a structure of an electronic device according to an embodiment of this application;
FIG. 3 is a diagram of a structure of a Type-C interface according to an embodiment of this application;
FIG. 4 is a diagram of a structure of a switch mode power supply circuit according to an embodiment of this application;
FIG. 5 is a diagram of a partial structure of a switch mode power supply circuit according to an embodiment of this application;
FIG. 6 is a diagram of a structure of a switch mode power supply circuit according to another embodiment of this application;
FIG. 7 is a diagram of a curve of a relationship between an output power and a feedback voltage according to an embodiment of this application;
FIG. 8 is a diagram of a curve of a relationship between a feedback voltage and VCC according to an embodiment of this application;
FIG. 9 is a diagram of a curve of a relationship between a feedback voltage and VCC according to another embodiment of this application;
FIG. 10 is a diagram of a structure of a switch mode power supply circuit according to still another embodiment of this application;
FIG. 11 is a diagram of a structure of a switch mode power supply circuit according to yet another embodiment of this application;
FIG. 12 is a diagram of a structure of a power supply circuit according to an embodiment of this application;
FIG. 13 is a diagram of a curve of a relationship between a feedback voltage and VCC according to still another embodiment of this application;
FIG. 14 is a diagram of a curve of a relationship between a feedback voltage and VCC according to yet another embodiment of this application;
FIG. 15 is a diagram of a structure of a switch mode power supply circuit according to still yet another embodiment of this application; and
FIG. 16 is a diagram of a structure of a switch mode power supply circuit according to a further embodiment of this application.

### DESCRIPTION OF EMBODIMENTS

The technical solutions according to some embodiments of this application are clearly and completely described in the following with reference to the accompanying drawings.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In the descriptions of this application, unless otherwise specified, "a plurality of" means two or more than two. In addition, in this application, orientation terms such as "up", "down", "left", and "right" may include but are not limited to being defined relative to placement orientations of components shown in the accompanying drawings. It should be understood that these directional terms may be relative concepts and are used for relative descriptions and clarifications, and may vary accordingly based on changes of the placement orientations of the components in the accompanying drawings. Unless otherwise expressly specified and limited, the term "connection" should be understood in a broad sense. For example, the "connection" may be a fixed connection, a detachable connection, or an integrated connection, or may be a direct connection or an indirect connection implemented through an intermediate medium. When being used to describe a three-port switch (which is also referred to as a switching device, for example, a switch transistor or a switching transistor), a "first end" and a "second end" may be connection ends of the switch, and a "control end" may be a control end of the switch. For example, for a metal-oxide-semiconductor field-effect transistor (metal-oxide-semiconductor field-effect transistor, MOSFET), the control end may be a gate (gate, g) of the MOS transistor, and the first end may be a source (source, s) of the MOS transistor, and the second end may be a drain (drain, d) of the MOS transistor; or the first end may be a drain of the MOS transistor, and the second end may be a source of the MOS transistor. In embodiments of this application, each switch may include one MOSFET. However, to minimize an increase in internal resistance caused by a switch connected in series on a line, each switch may alternatively include two or more MOSFETs connected in parallel.

The following describes technical solutions of this application with reference to accompanying drawings.

The switch mode power supply circuit and the control chip provided in embodiments of this application may be used in a power adapter of an electronic device like a mobile phone, a tablet computer, a notebook computer, an ultra-mobile personal computer (ultra-mobile personal computer, UMPC), a handheld computer, a netbook, a personal digital assistant (personal digital assistant, PDA), a wearable electronic device, or a virtual reality device.

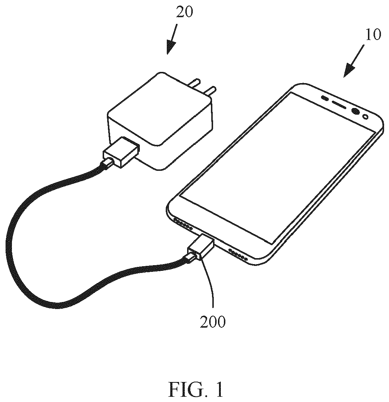

With reference to FIG. 1, an embodiment of this application provides a charging system including a power adapter 20 and an electronic device 10. Generally, the power adapter 20 includes a housing and a switch mode power supply circuit mounted in the housing. An input side of the switch mode power supply circuit is usually connected to a mains supply via a pin disposed on the housing, and an output side of the switch mode power supply circuit is connected to the electronic device via a plug 200. In addition, the switch mode power supply circuit may be usually soldered to a printed circuit board PCB in the housing.

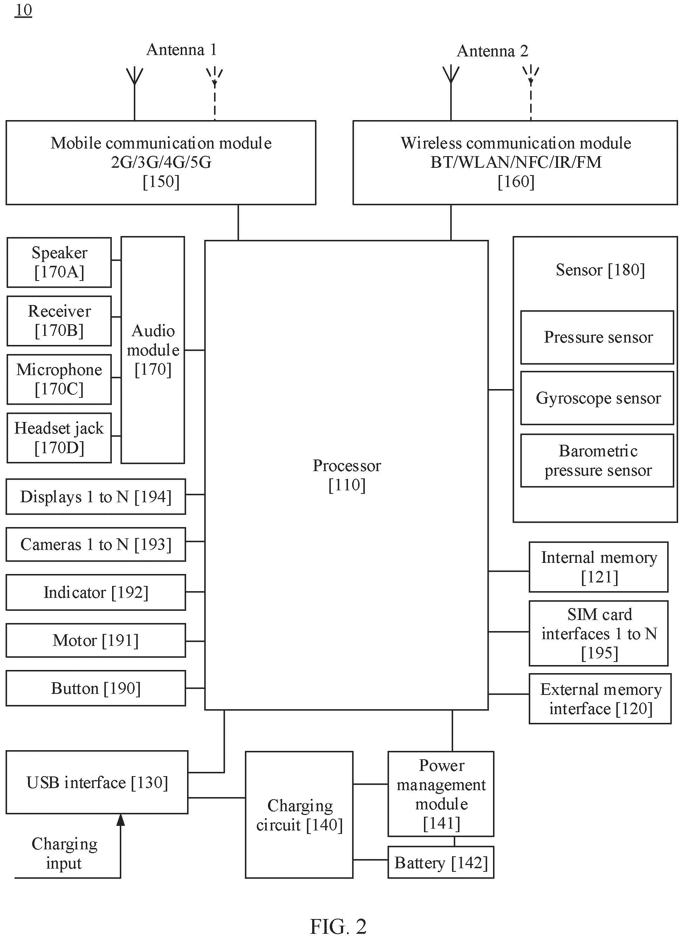

For example, FIG. 2 is a diagram of a structure of the electronic device 10.

As shown in FIG. 2, the electronic device 10 may include a processor 110, an external memory interface 120, an internal memory 121, a universal serial bus (universal serial bus, USB) interface 130, a charging circuit 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that a structure shown in this embodiment does not constitute a specific limitation on the electronic device 10. In some other embodiments of this application, the electronic device 10 may include more or fewer components than those shown in the figure, or combine some components, or split some components, or have different component arrangements. The components shown in the figure may be implemented by using hardware, software, or a combination of software and hardware.

The processor 110 may include one or more processing units.

For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In some embodiments, the electronic device 10 may alternatively include one or more processors 110. The processor 110 may be a nerve center and a command center of the electronic device 10. The processor 110 may generate an operation control signal based on instruction operation code and a time sequence signal, to complete control of instruction fetching and instruction execution.

A memory may be further disposed in the processor 110, and is configured to store instructions and data.

In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, so that system efficiency of the electronic device 10 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be configured to connect to the power adapter 20 to charge the electronic device 10, or may be configured to transmit data between the electronic device 10 and a peripheral device, or may be configured to connect to a headset for playing audio through the headset.

It may be understood that an interface connection relationship between the modules that is shown in this embodiment of the present invention is merely an example for description, and constitutes no limitation on the structure of the electronic device 10. In some other embodiments of this application, the electronic device 10 may alternatively use an interface connection manner different from that in the foregoing embodiment, or a combination of a plurality of interface connection manners.

The charging circuit 140 is configured to receive a charging input from a charger. The charger may be a wireless charger or a wired charger. When charging the battery 142, the charging circuit 140 may further supply power to the electronic device 10 by using the power management module 141.

In some embodiments of wired charging, the charging circuit 140 may receive a charging input of a wired charger through the USB interface 130. In some embodiments of wireless charging, the charging circuit 140 may receive a wireless charging input through a wireless charging coil of the electronic device 10. In some examples of this application, the wireless charger may include the power adapter 20 and a wireless charging cradle or a wireless charging panel connected to the power adapter 20 through the USB interface 130. A transmitting coil configured to wirelessly charge the electronic device 10 is disposed on the wireless charging cradle or the wireless charging panel.

The power management module 141 is configured to connect to the battery 142, the charging circuit 140, and the processor 110. The power management module 141 receives an input from the battery 142 and/or the charging circuit 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electricity leakage or impedance).

In some embodiments, the power management module 141 may alternatively be disposed in the processor 110. In some other embodiments, the power management module 141 and the charging circuit 140 may alternatively be disposed in a same device.

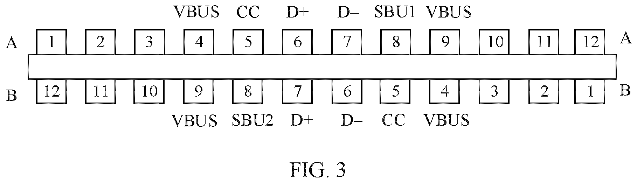

In addition, with reference to FIG. 1, to enable the electronic device 10 to be coupled to the power adapter 20 (the charger), the power adapter 20 may include a plug 200 plugged into the USB interface 130 of the electronic device (or the wireless charging cradle). Refer to FIG. 3. The plug may be a Type-C interface. The Type-C interface may include a CC pin shown in FIG. 3. A type of an external device coupled to the Type-C interface may be identified via the CC pin. In addition, as shown in FIG. 3, a surface A and a surface B of the Type-C interface each include two VBUS pins (a pin 4 and a pin 9 that are used to provide a USB voltage and that are used as voltage output ends in this embodiment of this application) that are symmetrically disposed, a CC pin (a pin 5), a D+ pin (a pin 6 on the surface A or a pin 7 on the surface B), a D- pin (a pin 7 on the surface A or a pin 6 on the surface B), and an SBU pin (a pin 8 that is a spare pin, which is marked as SBU1 on the surface A, and marked as SBU2 on the surface B). In addition, the plug may have another pin used for grounding, idleness, or the like. When the plug 200 of the power adapter 20 is plugged into the USB interface 130 of the electronic device 10, the electronic device 10 may be charged.

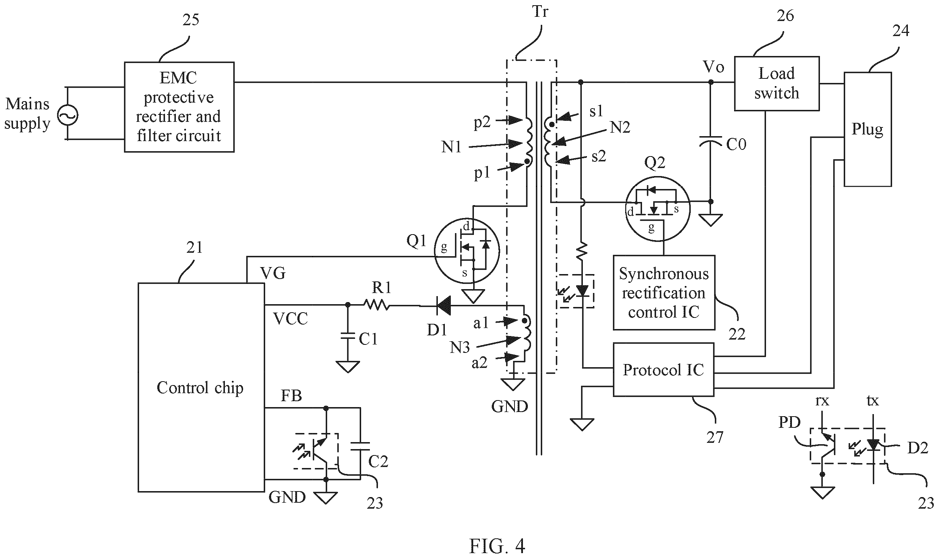

With reference to FIG. 4, a flyback switch mode power supply circuit is provided, including a transformer Tr, a first switch Q1, a second switch Q2, a control chip 21, a synchronous rectification integrated circuit (integrated circuit, IC) 22, and an optical coupling circuit 23.

The transformer Tr includes a primary coil N1, a secondary coil N2, and an auxiliary coil N3. A second end p2 of the primary coil N1 is connected to a power supply end. For example, the power supply end may be provided by a mains supply. A first end p1 of the primary coil N1 is connected to a ground GND through the first switch Q1. A first end s1 of the secondary coil N2 is connected to a voltage output end Vo of the entire system. For example, the voltage output end Vo may be a VBUS pin in a plug 24 (which is described as an output USB in the following example). A second end s2 of the secondary coil N2 is connected to the ground GND through the second switch Q2. Certainly, in some examples, the second switch Q2 may alternatively be disposed between the first end s1 of the secondary coil N2 and the voltage output end Vo. An output capacitor C0 is further disposed between the voltage output end Vo and the ground GND. A first end a1 of the auxiliary coil N3 is connected to a power supply pin VCC of the control chip 21 (as shown in FIG. 4, a rectifier diode D1 and a current-limiting resistor R1 may be sequentially connected in series between the first end a1 of the auxiliary coil N3 and VCC, where D1 serves to provide a direct current voltage for VCC, and R1 is used for current limiting; in some scenarios, R1 may be omitted; and, a capacitor C1 is further connected between VCC and the ground GND), and a second end a2 of the auxiliary coil N3 is connected to the ground GND. A voltage control pin VG of the control chip 21 is connected to a control end of the first switch Q1. The synchronous rectification control IC 22 is connected to a control end of the second switch Q2. A transmit end of the optical coupling circuit 23 is connected to the voltage output end Vo, and a receive end of the optical coupling circuit 23 is connected to a feedback end FB of the control chip 21. In addition, as shown in FIG. 4, an electromagnetic compatibility (electromagnetic compatibility, EMC) protective filter and rectifier circuit 25 is further disposed between the power supply end that provides the mains supply and the second end p2 of the primary coil N1. A load switch 26 may be further connected between the output capacitor C0 and the voltage output end Vo of the entire system. Generally, in some examples, the first end p1 of the primary coil N1, the first end s1 of the secondary coil N2, and the first end a1 of the auxiliary coil N3 may also be referred to as dotted terminals, and the second end p2 of the primary coil N1, the second end s2 of the secondary coil N2, and the second end a2 of the auxiliary coil N3 may also be referred to as undotted terminals. Certainly, a person skilled in the art may further define each coil in another naming manner. This is not limited in embodiments of this application.

In this way, an alternating current mains supply is converted into a high-voltage direct current after passing through the EMC protective rectifier and filter circuit 25 (which removes electromagnetic interference from a power grid, for example, including common-mode interference and serial-mode interference, and filters an alternating current into a direct current). A control signal (which may be, for example, a pulse width modulation (pulse width modulation, PWM) signal) output by the voltage control pin VG of the control chip 21 is used to control turn-on or cut-off of the first switch Q1, and a control signal (which may be, for example, a PWM signal) output by the synchronous rectification control IC 22 is used to control turn-on or cut-off of the second switch Q2. A flyback operating principle of the switch mode power supply circuit is as follows: When Q1 is turned on, energy is stored in the transformer Tr through the primary winding N1. In this case, Q2 and D1 are cut off, a power supply of the voltage output end Vo of the entire system is maintained by the capacitor C0, and a power supply of the control chip 21 is maintained by the capacitor C1. When Q1 is turned off, Q2 and D1 are turned on, and the energy stored in the transformer Tr is released through the secondary winding N2 and the auxiliary winding N3. In this case, theoretically, a voltage on C1 is in a fixed ratio to a voltage (a voltage on C0) at the output end Vo of the entire system. The ratio is a ratio n of a quantity of turns of the auxiliary winding N3 to that of the secondary winding N2. The control chip 21 controls a turn-on duty cycle or a switching frequency of the first switch Q1, to implement a stable power output. To implement output voltage adjustment, a protocol integrated circuit (integrated circuit, IC) 27 interacts with the electronic device.

In FIG. 4, the optical coupling circuit 23 includes an electro-optic diode D2 and a phototriode PD. An anode of D2 is used as the transmit end tx of the optical coupling circuit 23 and is connected to the output end Vo of the entire system, a cathode of D2 is connected to the ground GND through the protocol IC 27, one end of the phototriode PD is used as the receive end rx of the optical coupling circuit 23 and is connected to the feedback end FB of the control chip 21, and the other end of the phototriode PD is connected to the ground GND. The protocol IC 27 is further connected to the load switch 26, to control output and turn-off of the entire system. The protocol IC 27 controls turn-on or turn-off of the load switch 26 based on an operating status of the entire system, to ensure that an adapter safely supplies power to a terminal device. In addition, for the primary part, when determining, based on a voltage output by the feedback end FB, that an output of the secondary coil N2 is overloaded, the control chip 21 may alternatively turn off Q1 actively or start another security control mechanism through the optical coupling circuit 23.

With popularization of a fast charging protocol, increasing power adapters support a wide range of voltage output. For example, a power delivery (power delivery, PD) protocol supports an output voltage of 5 V to 20 V, and a supercharge protocol (supercharge protocol, SCP) supports an output voltage of 3.4 V to 20 V. A power adapter supporting an SCP output is used as an example. To ensure that an output voltage at the VG end of the control chip 21 is sufficient to drive Q1 (a high-voltage MOSFET is usually used), at the lowest output voltage of 3.4 V, a power supply voltage of the control chip 21 usually needs to be maintained above 8 V. In this case, the ratio of the quantity of turns of the auxiliary coil N3 to that of the secondary coil N2 needs to be greater than 2, to meet a VCC voltage requirement. When an output voltage of the secondary coil N2 is adjusted to 20 V, in consideration of impact of leakage inductance of the transformer Tr, the VCC voltage may actually exceed 60 V (for example, the ratio of the quantity of turns of N3 to that of N2 is 3). When a fixed output voltage of the secondary coil N2 is 5 V, and the ratio of the quantity of turns of the auxiliary coil N3 to that of the secondary coil N2 is 3, it is assumed that an operating current of the control chip 21 in a standby state or a light-load state is 2 mA. In this case, a power supply loss of the control chip 21 is 2 mA*15 V=30 mW. When the output voltage is 20 V, a power supply loss is 2 mA*60 V=120 mW. Power consumption is high in the standby state and the light-load state.

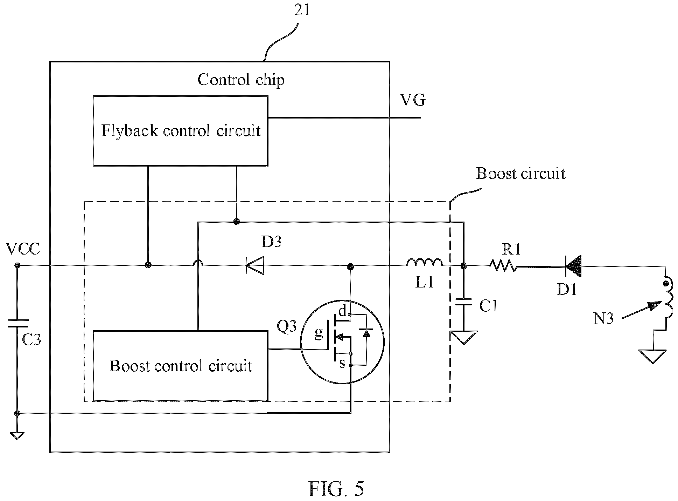

Generally, to reduce power consumption, in some examples, an output voltage of the auxiliary coil N3 may be further boosted through a boost boost circuit, and then a boosted output voltage is provided for VCC of the control chip 21. As shown in FIG. 5, the voltage output by the auxiliary coil N3 is converted into a direct current through D1 rectification, R1 current limiting, and C1 filtering, and the direct current is input to the boost circuit. In the example of FIG. 5, the boost circuit includes an inductor L1, a switching transistor Q3, and a diode D3. L1 and D3 are connected in series between R1 and VCC (where an anode of Db is connected to L1, and a cathode of D3 is connected to VCC), and Q3 is connected between the ground GND and a connection point between D3 and L1. A capacitor C3 is further connected between VCC and the ground GND. A boost control circuit is connected to a connection point between R1 and L1 and a control end of Q3. In this way, the boost control circuit can adjust a switching frequency of Q3 based on the voltage on C1, so that a voltage on VCC is a stable and fixed voltage. FIG. 5 further shows a flyback control circuit. VCC mainly provides a power supply voltage for the flyback control circuit. The flyback control circuit is connected to the voltage control pin VG of the control chip 21, and outputs a control signal to Q1, to control turn-on or cut-off of Q1. Certainly, FIG. 5 further shows that the flyback control circuit is connected to the connection point between R1 and L1. A low-voltage component in the flyback control circuit may alternatively obtain power from the connection point between R1 and L1 directly. Generally, to simplify a connection line between circuits, the boost control circuit, D3, Q3, and the flyback control circuit may be integrated into the control chip 21. The inductor L1 of the boost circuit is a component with a large volume and is not suitable to be integrated into the control chip 21. Therefore, the inductor L1 is connected to the outside of the control chip 21 via a pin of the control chip 21. Based on FIG. 4 and FIG. 5, a power supply principle in which the boost circuit is a flyback control circuit is described as follows: It is assumed that N3:N2=1:1, and a voltage drop of the diode D1 is ignored. When the output voltage of N2 is 20 V, a theoretical value of the voltage on C1 is 20 V, and an actual value is approximately 25 V in consideration of impact of leakage inductance. When the output voltage of N2 is 5 V, the theoretical value of the voltage on C1 is 5 V, and the actual value may be as low as 3 V in consideration of the voltage drop of the diode D1 and a circuit loss. Therefore, for application of an output voltage ranging from 5 V to 20 V, a range of the voltage on C1 (namely, an input voltage of the boost circuit) is approximately 3 V to 25 V. The boost control circuit sets the output voltage VCC to a fixed value (for example, 10 V) by controlling a duty cycle of Q3. When the voltage on C1 is lower than 10 V, the boost control circuit operates to increase the voltage on C1 to 10 V. When the voltage on C1 is higher than 10 V, the boost control circuit stops operating, and the voltage on C1 is applied to VCC after passing through L1 and D3. When the output voltage of N2 is fixedly 5 V, it is assumed that an operating current of the flyback control circuit in a no-load state or a light-load state is 2 mA. In this case, a loss of the boost circuit is 2 mA*10 V=20 mW. When the output voltage of N2 is 20 V, a loss of the boost circuit is 2 mA*20 V=40 mW. Compared with that in the solution provided in FIG. 4, in this solution, power consumption can be significantly reduced. However, the power supply voltage output by the boost circuit is always maintained at a fixed voltage value (for example, 10 V), and cannot be flexibly adjusted based on the load of the entire system. Therefore, in some scenarios (for example, in the light-load state or the no-load state), power consumption is still high and cannot be further reduced.

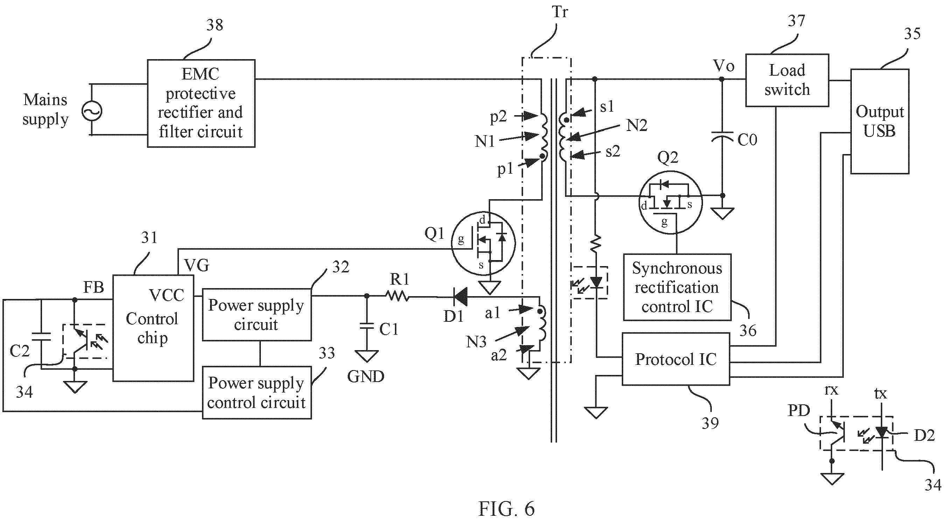

To further reduce power consumption, as shown in FIG. 6, an embodiment of this application provides a switch mode power supply circuit, including a transformer Tr, a first switch Q1, a second switch Q2, a control chip 31, a power supply circuit 32, a power supply control circuit 33, and an optical coupling circuit 34.

The transformer Tr includes a primary coil N1, a secondary coil N2, and an auxiliary coil N3. A second end p2 of the primary coil N1 is connected to a power supply end, and a first end p1 of the primary coil N1 is connected to the first switch Q1. In some examples, one end of the first switch Q1 is connected to the first end p1 of N1, and the other end of the first switch Q1 is connected to a ground GND. A first end s1 of the secondary coil N2 is connected to a voltage output end Vo, and a second end s2 of the secondary coil N2 is connected to the ground GND through the second switch Q2. Alternatively, a first end s1 of the secondary coil N2 is connected to a voltage output end Vo through the second switch Q2, and a second end s2 of the secondary coil N2 is connected to the ground GND. A first end a1 of the auxiliary coil N3 is connected to a power supply pin VCC of the control chip 31 through the power supply circuit 32, and a second end a2 of the auxiliary coil N3 is connected to the ground GND. A voltage control pin VG of the control chip 31 is connected to a control end of the first switch Q1. A transmit end of the optical coupling circuit 34 is connected to the voltage output end Vo, and a receive end of the optical coupling circuit 34 is connected to the power supply circuit 32 through the power supply control circuit 33. In addition, as shown in FIG. 6, the switch mode power supply circuit provided in this embodiment of this application further includes an EMC protective rectifier and filter circuit 38 disposed between the power supply end and the second end p2 of N1, a synchronous rectification control IC 36 connected to a control end of Q2, an output USB 35 connected to a protocol IC 39, and a load switch 37 disposed between the voltage output end Vo of the output USB 35 and an output capacitor CO. For functions of parts shared in FIG. 6 and FIG. 4, refer to the descriptions in FIG. 4. A difference lies in that the solution provided in this embodiment of this application further includes the power supply circuit 32 and the power supply control circuit 33 that are separately disposed. The optical coupling circuit 34 is configured to output a feedback voltage to the power supply control circuit 33. Herein, the power supply control circuit 33 is not limited to a logic circuit having a processing function. For example, the power supply control circuit 33 may be an integrated circuit like a central processing unit (central processing unit, CPU), a micro controller unit (micro controller unit, MCU), or a field programmable gate array (field programmable gate array, FPGA), or may be another logic circuit formed by connecting circuits having a specific digital or analog signal processing capability. The power supply control circuit 33 is configured to control, based on the feedback voltage, a voltage output by the power supply circuit 32 to the power supply pin. In this embodiment of this application, the power supply circuit 32 includes but is not limited to a boost boost circuit, a buck buck/boost boost circuit, and a switched capacitor (switched capacitor, SC) circuit (which is also referred to as a charger pump, charger pump). Certainly, in some examples, the power supply circuit 32 and the power supply control circuit 33 may alternatively be integrated for implementation. For example, the power supply control circuit 33 is integrated into a boost control circuit of the boost circuit.

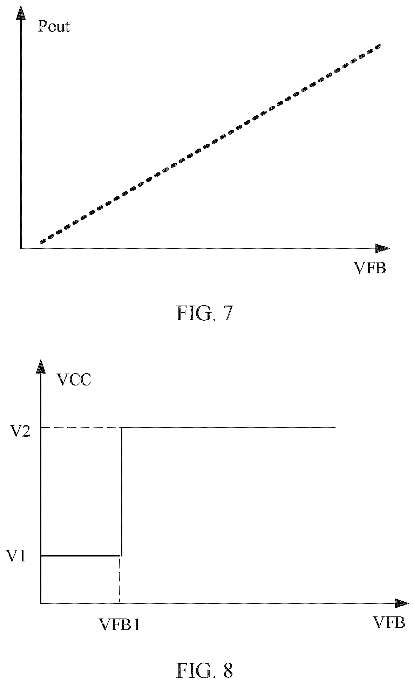

In this way, as shown in FIG. 7, the feedback voltage VFB output by the optical coupling circuit 34 is directly proportional to power Pout output by the entire system at the output voltage end Vo. The output power Pout of the entire system satisfies Pout=0.5*Lp*Ip²*f, where Lp is inductance of the primary coil, Ip is a peak current of the primary coil, and f is a frequency. VFB satisfies VFB=K*Vcs, where Vcs=Ip*Rcs , Rcs is a resistance value of a sampling resistor connected in series between Q1 and the ground GND, Ip is a peak current of the primary coil, and K is a constant. Therefore, it can be learned from the foregoing formulas that, in a normal case, larger output power and a larger peak current Ip of the primary coil indicate a larger voltage VFB, and a relationship between the voltage VFB and Pout may be approximately equivalent to a linear relationship shown in FIG. 7. (Certainly, the linear relationship is merely an ideal state. During actual application, it is considered that Pout is not a constant value in different load cases, and it can be learned with reference to the foregoing formula of Pout that, in the formula of Pout, Pout is represented as being in a linear relationship with a quadratic power of Ip. Therefore, an actual curve of the voltage VFB and Pout actually indicates that the voltage VFB and Pout have different slopes in different power intervals, but overall, the voltage VFB is directly proportional to Pout). Therefore, the voltage VFB is directly proportional to the output power Pout of the entire system. Larger output power Pout indicates a larger VFB.

In this case, the power supply control circuit 33 controls, based on the feedback voltage VFB, the voltage output by the power supply circuit 32 to the power supply pin VCC, to reflect a status of the power Pout, and outputs different voltages to the power supply pin VCC of the control chip 31. For example, when load of the entire system is in a light-load state or a no-load state, Pout is low. In this case, the feedback voltage VFB is low, and the power supply control circuit may control, based on the feedback voltage, the power supply circuit 32 to decrease the voltage output to the power supply pin VCC. When the load of the entire system is in a heavy-load state, Pout is high. In this case, the feedback voltage VFB is high, and the power supply control circuit may control, based on the feedback voltage, the power supply circuit 32 to increase the voltage output to the power supply pin VCC. In this way, in different load states, the power supply control circuit may control, based on the feedback voltage, the power supply circuit to provide different voltages for the control chip 31. This can reduce power consumption of a power adapter as much as possible in the light-load state or the no-load state.

With reference to FIG. 8, the power supply control circuit 33 is specifically configured to: when determining that the feedback voltage VFB is less than a first threshold VFB1, output a first control signal to the power supply circuit 32; and the power supply circuit 32 is configured to output a first voltage V1 to the power supply pin VCC based on the first control signal. The power supply control circuit 33 is specifically configured to: when determining that the feedback voltage VFB is greater than or equal to the first threshold VFB1, output a second control signal to the power supply circuit 32; and the power supply circuit 32 is configured to output a second voltage to the power supply pin VCC based on the second control signal. The second voltage is greater than the first voltage.

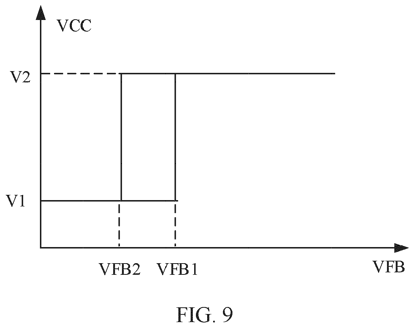

Generally, in a stable load state, the feedback voltage VFB output by the optical coupling circuit 34 fluctuates to some extent due to fluctuation of a system voltage. To avoid such fluctuation, when the feedback voltage VFB is just near the first threshold VFB1, the power supply control circuit 33 frequently configures an output voltage of the power supply circuit 32 to be switched between the first voltage V1 and the second voltage V2. In this embodiment of this application, a hysteresis voltage interval may be further set. Refer to FIG. 9. Specifically, the power supply control circuit 33 is specifically configured to: when determining that the feedback voltage VFB is less than or equal to a second threshold VFB2, output a first control signal to the power supply circuit 32; and the power supply circuit 32 is configured to output a first voltage V1 to the power supply pin VCC based on the first control signal. The power supply control circuit 33 is specifically configured to: when determining that the feedback voltage VFB is greater than or equal to a first threshold VFB1, output a second control signal to the power supply circuit 32; and the power supply circuit 32 is configured to output a second voltage V2 to the power supply pin VCC based on the second control signal. The second threshold VFB2 is less than the first threshold VFB1, and the second voltage V2 is greater than the first voltage V1. In this way, a difference between the first threshold VFB1 and the second threshold VFB2 is within a proper range, to ensure that the power supply control circuit 33 does not frequently configure the output voltage of the power supply circuit 32 to be switched between the first voltage V1 and the second voltage V2.

In this embodiment of this application, the first threshold VFB1 and the second threshold VFB2 may further constitute a switching hysteresis voltage interval. In the switching hysteresis voltage interval, the power supply control circuit 33 is specifically configured to: when determining that the feedback voltage VFB is between the first threshold VFB1 and the second threshold VFB2, output a third control signal to the power supply circuit 32; and the power supply circuit 32 is configured to maintain, based on the third control signal, a third voltage currently output to the power supply pin VCC. The third voltage is the first voltage or the second voltage. For example, when the power supply control circuit 33 determines that the feedback voltage VFB is between the first threshold VFB1 and the second threshold VFB2, the power supply circuit 32 is controlled, based on the third control signal, to keep outputting the first voltage to the power supply pin VCC if the currently output third voltage is the first voltage, and keep outputting the second voltage to the power supply pin VCC if the currently output third voltage is the second voltage. In this way, it is ensured that the power supply control circuit does not frequently configure the output voltage of the power supply circuit to be switched between the first voltage V1 and the second voltage V2, and it is also ensured that the control chip is not powered off.

The first threshold VFB1 and the second threshold VFB2 constitute the switching hysteresis voltage interval, and a difference between the first threshold VFB1 and the second threshold VFB2 is within [100 mV, 200 mV].

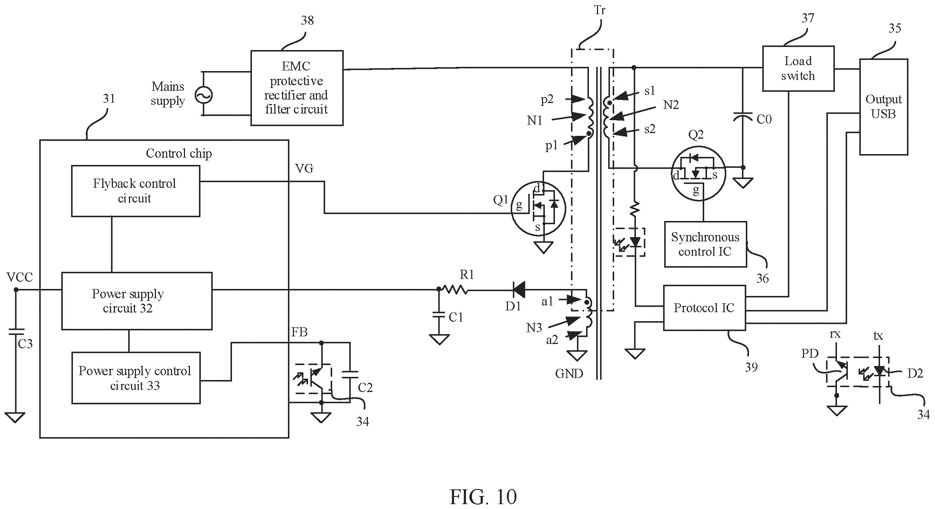

In an example of this application, as shown in FIG. 10, to improve component integration, space occupied by a circuit in a power adapter may be reduced. The control chip 31 provided in this embodiment of this application may include the power supply circuit 32 and the power supply control circuit 33. For structures and functions of the power supply circuit 32 and the power supply control circuit 33, refer to the descriptions in the foregoing embodiments. Details are not described herein again. The control chip 31 includes a feedback pin FB connected to the power supply control circuit 33, and a receive end of the optical coupling circuit 34 is connected to the feedback pin FB.

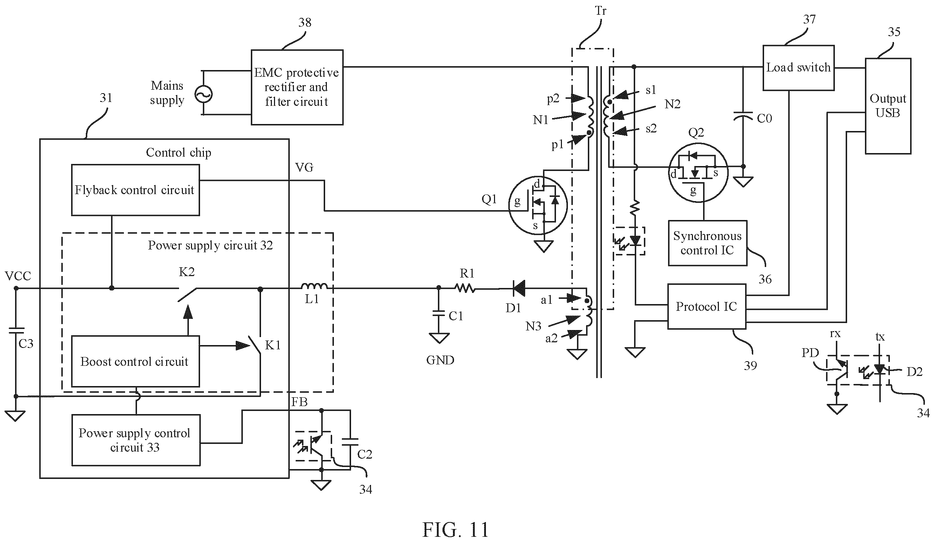

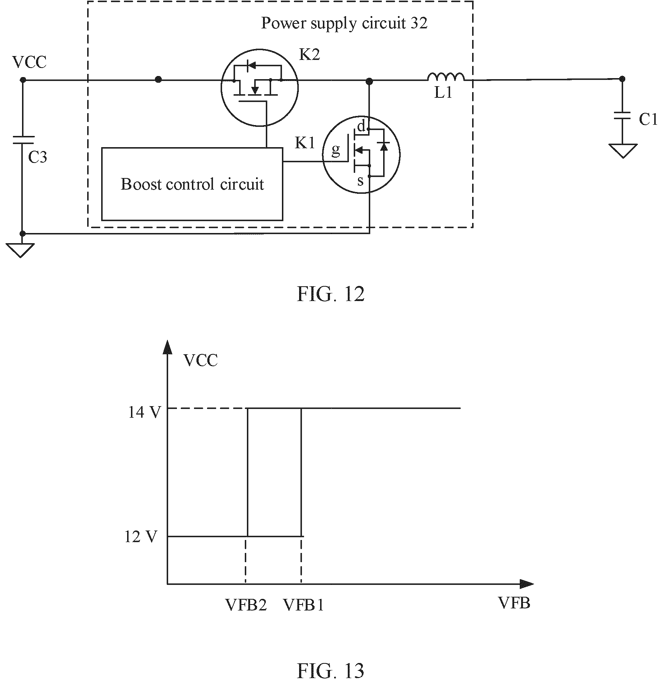

In some examples, as shown in FIG. 11, the power supply circuit 32 may be a boost circuit. The boost circuit includes a boost control circuit, an inductor L1, and switches K1 and K2. L1 and K2 are connected in series between R1 and VCC, and K1 is connected between a ground GND and a connection point between K2 and L1. A capacitor C3 is further connected between VCC and the ground GND. The boost control circuit is connected to the power supply control circuit 33 and control ends of the switches K1 and K2. In this way, the power supply control circuit 33 may adjust switching frequencies of the switches K1 and K2 through the boost control circuit in the foregoing manner, to convert a voltage on C1 into the first voltage V1 or the second voltage V2, and output the first voltage V1 or the second voltage V2 to VCC. FIG. 11 further shows a flyback control circuit. VCC mainly provides a power supply voltage for the flyback control circuit. The flyback control circuit is connected to the voltage control pin VG of the control chip 31, and outputs a control signal to Q1, to control turn-on or cut-off of Q1. Generally, the inductor L1 of the boost circuit is a component with a large volume and is not suitable to be integrated into the control chip 31. Therefore, the inductor L1 may alternatively be connected to the outside of the control chip 31 via a pin of the control chip 31. In some examples, as shown in FIG. 12, the switches K1 and K2 may be MOS transistors. In this way, the boost control circuit may synchronously control duty cycles of the MOS transistors K1 and K2 to adjust the VCC voltage. Certainly, in some examples, to reduce a quantity of control signals, the switch K2 may alternatively be replaced with a diode. An anode of the diode is connected to L1, and a cathode of the diode is connected to VCC.

The circuit provided in FIG. 11 is used as an example. As shown FIG. 13, in an application scenario, it may be set, based on an operating condition of a specific product, that the entire system operates in a no-load state or a light-load state when an FB pin voltage of the control chip 31 is less than VFB2, and the entire system is in a normal load state when the FB pin voltage of the control chip 31 is greater than VFB1. Generally, based on a power supply specification requirement of the control chip, the first voltage is within an interval of [4.5 V, 12 V], and the second voltage is within an interval of [6.5 V, 15 V]. For example, because a power supply voltage requirement of some control chips 31 is high, it is set that when VFB<VFB2, the boost control circuit controls a closed-loop output voltage of the boost circuit, namely, the power supply voltage VCC of the control chip 31, to be approximately 12 V; and when VFB>VFB1, the boost control circuit controls the closed-loop output voltage of the boost circuit, namely, the power supply voltage VCC of the control chip 31, to be set to approximately 14 V. VG is obtained by converting VCC through a low dropout regulator (low dropout regulator, LDO), and is usually set to approximately 10 V. A voltage interval VFB2 to VFB1 is a switching hysteresis voltage interval that is determined by sampling precision of the FB pin voltage and is usually set to approximately 100 mV to 200 mV. In the switching hysteresis voltage interval, a VCC output is controlled to be 12 V or 10 V with reference to the foregoing example. In conclusion, it is assumed that when an operating current of the control chip 31 in the no-load state or the light-load state is 2 mA and an output voltage is 5 V, power consumption of supplying power by the control chip 31 in the no-load state is reduced by 2 mA*2 V=4 mW compared with power consumption in a conventional power supply manner, where 14 V-12 V=2 V.

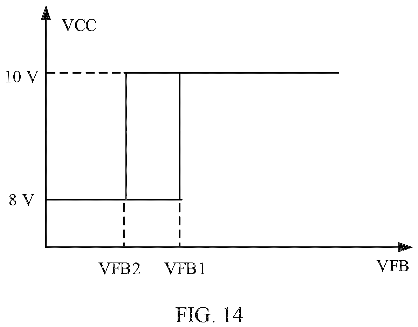

In addition, in another example, FIG. 14 shows an operating condition of a product different from that provided in FIG. 13. When a power supply voltage requirement of the control chip 31 is low, it is set that when VFB<VFB2, the boost control circuit controls a closed-loop output voltage of the boost circuit, namely, the power supply voltage VCC of the control chip 31, to be approximately 8 V; and when VFB>VFB1, the boost control circuit controls the closed-loop output voltage of the boost circuit, namely, the power supply voltage VCC of the control chip 31, to be set to approximately 10 V. VG is obtained by converting VCC through an LDO, and a voltage drop from VCC to VG is approximately 1 V. In conclusion, it is assumed that when an operating current of the control chip 31 in the no-load state or the light-load state is 2 mA and an output voltage is 5 V, power consumption of supplying power by the control chip 31 in the no-load state is reduced by 2 mA*2 V=4 mW compared with power consumption in a conventional power supply manner, where 10 V-8 V=2 V.

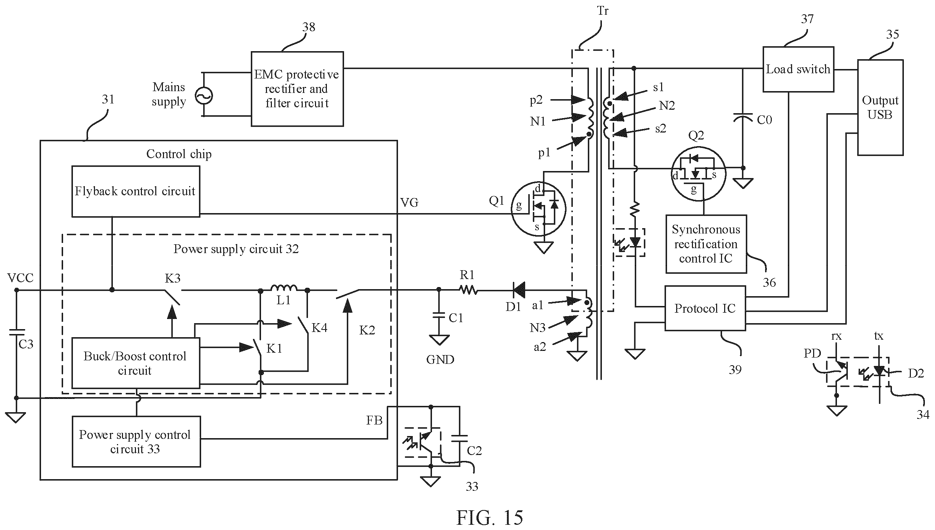

In some examples, as shown in FIG. 15, the power supply circuit 32 may be a buck/boost circuit. The buck/boost circuit includes a buck/boost control circuit, an inductor L1, and switches K1 to K4. K2, L1, and K3 are connected in series between R1 and VCC, and K1 is connected between a ground GND and a connection point between K3 and L1. One end of K4 is connected to a connection point between Q4 and L1, and the other end of K4 is connected to the ground GND. A capacitor C3 is further connected between VCC and the ground GND. The buck/boost control circuit is connected to the power supply control circuit 33 and control ends of K1 to K4. In this way, the boost control circuit can adjust switching frequencies of K1 to K4 based on a voltage on C1, so that a voltage on VCC is a stable and fixed voltage. Generally, the inductor L1 of the boost circuit is a component with a large volume and is not suitable to be integrated into the control chip 31. Therefore, the inductor L1 may alternatively be connected to the outside of the control chip 31 via a pin of the control chip 31. In some examples, all of K1 to K4 may be MOS transistors. Certainly, in some examples, to reduce a quantity of control signals, the switches K3 and K4 may alternatively be replaced with diodes. When K3 is a diode, an anode is connected to L1, and a cathode is connected to VCC. When K4 is a diode, a cathode is connected to a connection point between K2 and L1, and an anode is connected to the ground GND.

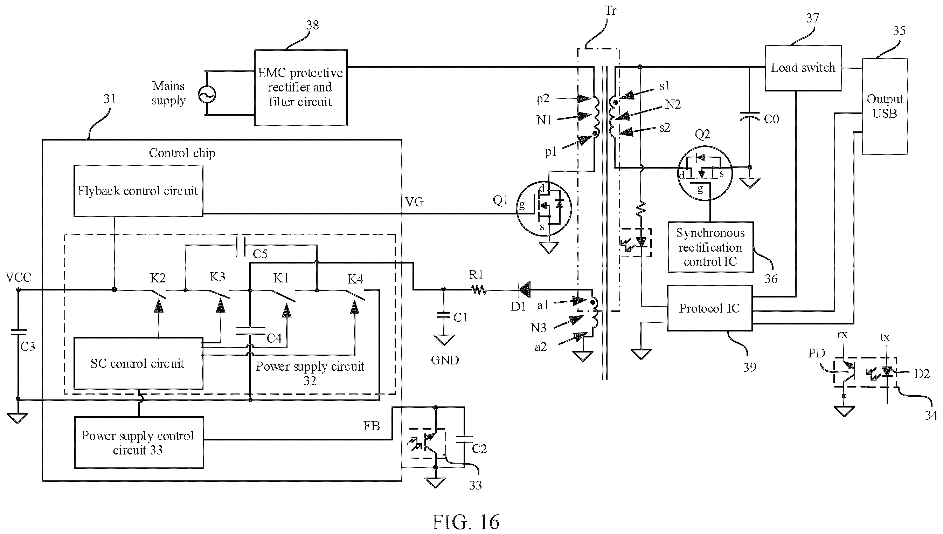

In some examples, as shown in FIG. 16, the power supply circuit 32 may be an SC circuit (or a charge pump). The SC circuit includes an SC control circuit, switches K1 to K4, and capacitors C4 and C5. A first end of K2 is connected to VCC, a second end of K2 is connected to a first end of K3, a second end of K3 is connected to a first end of K1, a second end of K1 is connected to a first end of K4, and a second end of K4 is connected to the ground GND. C4 is connected between the first end of K1 and the ground GND, and C5 is connected between the first end of K3 and the second end of K1. The first end of K1 is connected to a connection point between R1 and C1. Control ends of K1 to K4 are all connected to the SC control circuit. The SC circuit may convert, in a fixed proportion, voltages input at two ends of C4 into voltages on VCC (voltages at two ends of C3). The SC circuit shown in FIG. 16 is used as an example. K3 and K4 are simultaneously turned on, and K1 and K2 are simultaneously turned on. Control signals of K3 and K4 are complementary to control signals of K1 and K2. In this way, in a period of time in a cycle, K3 and K4 are turned on, and K1 and K2 are turned off. In this way, C5 and C4 are connected in parallel between the connection point between R1 and C1 and GND, and a voltage output by N3 to C1 is used to charge C5 and C4 simultaneously. In another period of time in the cycle, K3 and K4 are turned off, K1 and K2 are turned on, and C5 and C4 are connected in series to discharge C3. In this way, a 1:2 boost mode is formed. Certainly, the SC control circuit may further adjust duty cycles of the control signals output to K3 and K4 and duty cycles of the control signals output to K1 and K2, to flexibly adjust a boost ratio. Certainly, FIG. 16 merely provides an example of the SC circuit. Certainly, in some examples, the SC circuit may further include more switches or capacitors. A voltage conversion ratio of the switched capacitor SC circuit includes but is not limited to one or more of the following: 1:1, 1:2, 1:3, 1:4, 2:1, 3:1, and 4:1.

An embodiment of this application further provides a power supply control method, applied to power supply control for a control chip of a switch mode power supply circuit. The method includes the following steps.

101: Output a feedback voltage via a receive end of an optical coupling circuit, where a transmit end of the optical coupling circuit is connected to a voltage output end of the switch mode power supply circuit.

102: Control, based on the feedback voltage, a voltage output to a power supply pin of the control chip.

In some examples, step 102 specifically includes: when it is determined that the feedback voltage is less than a first threshold, outputting a first control signal; and outputting a first voltage to the power supply pin of the control chip of the switch mode power supply circuit based on the first control signal; and when it is determined that the feedback voltage is greater than or equal to the first threshold, outputting a second control signal; and outputting a second voltage to the power supply pin of the control chip of the switch mode power supply circuit based on the second control signal. The second voltage is greater than the first voltage.

In some other examples, step 102 specifically includes: when it is determined that the feedback voltage is less than or equal to a second threshold, outputting a first control signal; and outputting a first voltage to the power supply pin of the control chip of the switch mode power supply circuit based on the first control signal; and when it is determined that the feedback voltage is greater than or equal to a first threshold, outputting a second control signal; and outputting a second voltage to the power supply pin of the control chip of the switch mode power supply circuit based on the second control signal. The second threshold is less than the first threshold, and the second voltage is greater than the first voltage. In addition, step 102 further includes: when it is determined that the feedback voltage is between the first threshold and the second threshold, outputting a third control signal; and maintaining, based on the third control signal, a third voltage currently output to the power supply pin of the control chip of the switch mode power supply circuit. The third voltage is the first voltage or the second voltage. A difference between the first threshold and the second threshold is within [100 mV, 200 mV].

For technical problems resolved and technical effects achieved by the power supply control method, refer to the related descriptions in the foregoing switch mode power supply circuit. Details are not described herein again.

Although this application is described with reference to embodiments, in a process of implementing this application that claims protection, a person skilled in the art may understand and implement other variations of the disclosed embodiments by viewing the accompanying drawings, disclosed content, and the appended claims. In the claims, "comprising" does not exclude another component or another step, and "a" or "one" does not exclude a meaning of plurality. Some measures are recorded in dependent claims that are different from each other, but this does not mean that these measures cannot be combined to produce a better effect.

The foregoing has described embodiments of this application. The foregoing descriptions are examples, not exhaustive, and are not limited to the disclosed embodiments. Many modifications and changes are apparent to those of ordinary skill in the art without departing from the scope and spirit of the illustrated embodiments. The selection of terms used herein is intended to best explain the principles of embodiments, practical applications, or improvements to technologies in the market, or to enable another person of ordinary skill in the art to understand embodiments disclosed herein.

## Claims

1. A switch mode power supply circuit, comprising a control chip, a power supply circuit, a power supply control circuit, and an optical coupling circuit, wherein
the power supply circuit is connected to a power supply pin of the control chip, a transmit end of the optical coupling circuit is connected to a voltage output end of the switch mode power supply circuit, and a receive end of the optical coupling circuit is connected to the power supply circuit via the power supply control circuit;
the optical coupling circuit is configured to output a feedback voltage to the power supply control circuit; and
the power supply control circuit is configured to control, based on the feedback voltage, a voltage output by the power supply circuit to the power supply pin.

2. The switch mode power supply circuit according to claim 1, wherein
the power supply control circuit is specifically configured to: when determining that the feedback voltage is less than a first threshold, output a first control signal to the power supply circuit; and the power supply circuit is configured to output a first voltage to the power supply pin based on the first control signal; and
the power supply control circuit is specifically configured to: when determining that the feedback voltage is greater than or equal to the first threshold, output a second control signal to the power supply circuit; and the power supply circuit is configured to output a second voltage to the power supply pin based on the second control signal, wherein the second voltage is greater than the first voltage.

3. The switch mode power supply circuit according to claim 1, wherein
the power supply control circuit is specifically configured to: when determining that the feedback voltage is less than or equal to a second threshold, output a first control signal to the power supply circuit; and the power supply circuit is configured to output a first voltage to the power supply pin based on the first control signal; and
the power supply control circuit is specifically configured to: when determining that the feedback voltage is greater than or equal to a first threshold, output a second control signal to the power supply circuit; and the power supply circuit is configured to output a second voltage to the power supply pin based on the second control signal, wherein the second threshold is less than the first threshold, and the second voltage is greater than the first voltage.

4. The switch mode power supply circuit according to claim 3, wherein
the power supply control circuit is specifically configured to: when determining that the feedback voltage is between the first threshold and the second threshold, output a third control signal to the power supply circuit; and
the power supply circuit is configured to maintain, based on the third control signal, a third voltage currently output to the power supply pin, wherein the third voltage is the first voltage or the second voltage.

5. The switch mode power supply circuit according to claim 3 or 4, wherein a difference between the first threshold and the second threshold is within [100 mV, 200 **mV].**

6. The switch mode power supply circuit according to any one of claims 1 to 5, wherein the power supply circuit comprises a boost boost circuit, a buck buck/boost boost circuit, and a switched capacitor SC circuit.

7. The switch mode power supply circuit according to any one of claims 1 to 6, wherein the control chip comprises the power supply circuit and the power supply control circuit; and
the control chip comprises a feedback pin connected to the power supply control circuit, and the receive end of the optical coupling circuit is connected to the feedback pin.

8. The switch mode power supply circuit according to any one of claims 2 to 4, wherein
the first voltage is within [4.5 V, 12 V], and the second voltage is within [6.5 V, 15 V].

9. The switch mode power supply circuit according to any one of claims 2 to 4, wherein the first voltage is 8 V, and the second voltage is 10 V; or
the first voltage is 12 V, and the second voltage is 14 V.

10. A control chip, used in a switch mode power supply circuit, wherein the switch mode power supply circuit comprises the control chip and an optical coupling circuit, and the control chip comprises a power supply circuit and a power supply control circuit;
the power supply circuit is connected to a power supply pin of the control chip, a transmit end of the optical coupling circuit is connected to a voltage output end of the switch mode power supply circuit, a receive end of the optical coupling circuit is connected to the power supply circuit via the power supply control circuit, the control chip comprises a feedback pin connected to the power supply control circuit, and the feedback pin is configured to connect to the receive end of the optical coupling circuit; and
the power supply control circuit is configured to control, based on a feedback voltage output by the optical coupling circuit, a voltage output by the power supply circuit to the power supply pin.

11. The control chip according to claim 10, wherein the power supply control circuit is specifically configured to: when determining that the feedback voltage is less than a first threshold, output a first control signal to the power supply circuit, and
the power supply circuit is configured to output a first voltage to the power supply pin based on the first control signal; and
the power supply control circuit is specifically configured to: when determining that the feedback voltage is greater than or equal to the first threshold, output a second control signal to the power supply circuit, and
the power supply circuit is configured to output a second voltage to the power supply pin based on the second control signal, wherein the second voltage is greater than the first voltage.

12. The control chip according to claim 10, wherein the power supply control circuit is specifically configured to: when determining that the feedback voltage is less than or equal to a second threshold, output a first control signal to the power supply circuit, and
the power supply circuit is configured to output a first voltage to the power supply pin based on the first control signal; and
the power supply control circuit is specifically configured to: when determining that the feedback voltage is greater than or equal to a first threshold, output a second control signal to the power supply circuit, and
the power supply circuit is configured to output a second voltage to the power supply pin based on the second control signal, wherein the second threshold is less than the first threshold, and the second voltage is greater than the first voltage.

13. The control chip according to claim 12, wherein
the power supply control circuit is specifically configured to: when determining that the feedback voltage is between the first threshold and the second threshold, output a third control signal to the power supply circuit; and the power supply circuit is configured to maintain, based on the third control signal, a third voltage currently output to the power supply pin, wherein the third voltage is the first voltage or the second voltage.

14. The control chip according to claim 12 or 13, wherein a difference between the first threshold and the second threshold is within [100 mV, 200 mV].

15. The control chip according to any one of claims 10 to 14, wherein the power supply circuit comprises a boost circuit, a buck/boost circuit, and an SC circuit.

16. The control chip according to any one of claims 11 to 13, wherein the first voltage is within [4.5 V, 12 V], and the second voltage is within [6.5 V, 15 V].

17. The control chip according to any one of claims 11 to 13, wherein the first voltage is 8 V, and the second voltage is 10 V; or the first voltage is 12 V, and the second voltage is 14 V.

18. A power supply control method, applied to power supply control for a control chip of a switch mode power supply circuit, and comprising:
outputting a feedback voltage via a receive end of an optical coupling circuit, wherein a transmit end of the optical coupling circuit is connected to a voltage output end of the switch mode power supply circuit; and
controlling, based on the feedback voltage, a voltage output to a power supply pin of the control chip.

19. The power supply control method according to claim 18, wherein the controlling, based on the feedback voltage, a voltage output to a power supply pin of the control chip of the switch mode power supply circuit comprises:
when it is determined that the feedback voltage is less than a first threshold, outputting a first control signal; and outputting a first voltage to the power supply pin of the control chip of the switch mode power supply circuit based on the first control signal; and
when it is determined that the feedback voltage is greater than or equal to the first threshold, outputting a second control signal; and outputting a second voltage to the power supply pin of the control chip of the switch mode power supply circuit based on the second control signal, wherein the second voltage is greater than the first voltage.

20. The power supply control method according to claim 18, wherein the controlling, based on the feedback voltage, a voltage output to a power supply pin of the control chip of the switch mode power supply circuit comprises:
when it is determined that the feedback voltage is less than or equal to a second threshold, outputting a first control signal; and outputting a first voltage to the power supply pin of the control chip of the switch mode power supply circuit based on the first control signal; and
when it is determined that the feedback voltage is greater than or equal to a first threshold, outputting a second control signal; and outputting a second voltage to the power supply pin of the control chip of the switch mode power supply circuit based on the second control signal, wherein the second threshold is less than the first threshold, and the second voltage is greater than the first voltage.

21. The power supply control method according to claim 20, wherein the controlling, based on the feedback voltage, a voltage output to a power supply pin of the control chip of the switch mode power supply circuit further comprises:
when it is determined that the feedback voltage is between the first threshold and the second threshold, outputting a third control signal; and maintaining, based on the third control signal, a third voltage currently output to the power supply pin of the control chip of the switch mode power supply circuit, wherein the third voltage is the first voltage or the second voltage.

22. The power supply control method according to claim 20 or 21, wherein a difference between the first threshold and the second threshold is within [100 mV, 200 mV].

23. A power adapter, comprising a housing and the switch mode power supply circuit according to any one of claims 1 to 9 or the control chip according to any one of claims 10 to 17 that is mounted in the housing.

24. A charging system, comprising a power adapter and an electronic device, wherein the power adapter is connected to the electronic device, and the power adapter comprises the power adapter according to claim 23.
